# EUROPÄISCHE PATENTSCHRIFT

(11) **EP 4 338 583 B1**
(45) Veröffentlichungstag und Bekanntmachung des Hinweises auf die Patenterteilung: **11.06.2025**
(21) Anmeldenummer: 23179412.4
(22) Anmeldetag: 15.06.2023
(51) Int. Cl.: A01F 15/14, A01F 15/07

(54) **VERFAHREN ZUR REGELUNG EINES UMWICKELVORGANGS**
METHOD FOR CONTROLLING A WRAPPING OPERATION
PROCÉDÉ DE RÉGULATION D'UNE OPÉRATION D'ENVELOPPEMENT

(30) Priorität: 29.08.2022 DE 102022121786
(43) Veröffentlichungstag der Anmeldung: 20.03.2024
(73) Patentinhaber: Usines CLAAS France S.A.S, 57140 St. Rémy / Woippy (FR)
(72) Erfinder: Fuchs, Volker, 54439 Saarburg (DE); Vagnier, Vincent, 55160 Fresnes en Woevre (FR); Obellianne, Steve, 57530 Courcelles-Chaussy (FR); Rongvaux, Laurent, 54800 Tronville (FR); Wucher, Renaud, 57070 Metz (FR); Dachelet, Thibaut, 57140 Woippy (FR)
(74) Vertreter: CLAAS Gruppe

(56) Entgegenhaltungen:
- EP-B1- 2 816 887
- EP-B1- 3 199 015
- DE-A1- 10 026 066

## Beschreibung

Die vorliegende Erfindung betrifft ein Verfahren zur Regelung eines Umwickelvorgangs eines in einer Presskammer einer Rundballenpresse rotierenden Rundballens gemäß dem Oberbegriff des Anspruches 1. Weiterhin betrifft die vorliegende Erfindung eine Rundballenpresse gemäß dem Oberbegriff des Anspruches 8.

Ein Verfahren sowie eine Rundballenpresse der eingangs genannten Art sind aus der DE 100 26 066 A1 bekannt. Die Rundballenpresse umfasst eine als Bremse ausgeführte Spannvorrichtung, die mittels eines Motors auf elastisches, bahnförmiges Wickelmaterial, das von einer Vorratsrolle abgezogen wird, wirkt und dadurch eine Spannung des Wickelmaterials verursacht. Zur Ansteuerung des Motors ist eine Steuereinheit vorgesehen, durch die die Spannung des Wickelmaterials veränderbar ist.

Als elastisches Wickelmaterial kommt insbesondere eine Kunststofffolie zur Anwendung. Beim Abziehen des Wickelmaterials erfährt dieses eine Dehnung aufgrund der durch die Spannvorrichtung aufgebrachten Spannung, welche durch die Ansteuerung der Spannvorrichtung durch die Steuereinheit vorgegeben ist. Die sich einstellende Spannung des Wickelmaterials beim Umwickeln wird in Abhängigkeit vom materialspezifischen Spannungs-Dehnungsdiagramm vorgegeben. Dabei bleiben äußere Umgebungseinflüsse auf das Dehnungsverhalten des Wickelmaterials, wie Umgebungstemperatur und Luftfeuchtigkeit, unberücksichtigt, so dass die sich tatsächlich im Wickelmaterial einstellende Spannung von der vorgegeben, gewünschten Spannung und dem damit verbundenen Dehnungsverhalten abweicht.

Der Erfindung liegt somit die Aufgabe zugrunde, ein Verfahren zur Regelung eines Umwickelvorgangs sowie eine Rundballenpresse der eingangs genannten Art weiterzubilden, welche sich durch eine verbesserte Regelung der durch die Spanneinrichtung auf das Wickelmaterial aufgebrachten Spannung auszeichnet.

Diese Aufgabe wird durch ein Verfahren gemäß dem Oberbegriff von Anspruch 1 durch die Merkmale des kennzeichnenden Teils von Anspruch 1 gelöst. Weiterhin wird die Aufgabe durch eine Rundballenpresse gemäß dem Oberbegriff von Anspruch 8 durch die Merkmale des kennzeichnenden Teils von Anspruch 8 gelöst. Vorteilhafte Ausführungsformen und Weiterbildungen sind den hiervon abhängigen Ansprüchen zu entnehmen.

Gemäß Anspruch 1 wird ein Verfahren zur Regelung eines Umwickelvorgangs eines in einer Presskammer einer Rundballenpresse rotierenden Rundballens mit einem elastischen, bahnförmigen Wickelmaterial vorgeschlagen. Das Wickelmaterial wird von zumindest einer Vorratsrolle mittels einer durch eine Steuereinheit angesteuerten Spannvorrichtung abgezogen und während des Umwickelvorgangs durch zumindest eine Führungsrolle geführt, wobei der Rundballen mit dem durch die Spannvorrichtung vorgespannten Wickelmaterial mit einer durch die Steuereinheit vorgegebenen einstellbaren Wickelspannung umwickelt wird. Erfindungsgemäß ist vorgesehen, dass durch eine zumindest einen Sensor umfassende Sensoranordnung ein Ist-Wert für eine aus der Wickelspannung resultierende Kraft bestimmt wird, dass der Ist-Wert mit einem Soll-Wert für die aus der Wickelspannung resultierende Kraft verglichen wird, welcher aus einem während der Durchführung zumindest eines vorangehenden Umwickelvorgangs bestimmten und für das Wickelmaterial spezifischen Spannungs-Dehnungs-Diagramm abgeleitet wird, wobei in Abhängigkeit von einer durch den Vergleich von Ist-Wert und Soll-Wert bestimmten Abweichung die Spannvorrichtung angesteuert wird. Die Ansteuerung der Spannvorrichtung erfolgt in Abhängigkeit von einem Soll-Wert, der aus dem Spannungs-Dehnungs-Diagramm für das zu verarbeitende Wickelmaterial abgeleitet wird. Auf diese Weise kann der Einfluss der Qualität des Wickelmaterials auf das Dehnungsverhalten berücksichtigt werden. Die Qualität wird beispielsweise durch die Gleichmäßigkeit der Dicke des Wickelmaterials beeinflusst.

Das bevorzugt als Wickelmaterial verwendete Polyethylen zeigt, wie andere Kunststoffmaterialien, im Allgemeinen eine sehr ähnliche Verlaufsform im Spannungs-Dehnungs-Diagramm, wobei die relative Lage der Kurve unbekannt ist. Um die möglichen Materialeigenschaften möglichst voll ausnutzen zu können, wird neben der vorgegebenen einstellbaren Wickelspannung zusätzlich durch die zumindest einen Sensor umfassende

Sensoranordnung der Ist-Wert für die aus der Wickelspannung resultierende Kraft bestimmt und als Eingangsgröße der Regelung verwendet, um die Dehnung des Wickelmaterials durch die Ansteuerung der Spannvorrichtung zu regeln.

Das Verfahren ermöglicht somit die optimale Nutzung des Wickelmaterials. Dadurch funktioniert die Folienbindung zuverlässiger und der Wickelmaterialverbrauch kann reduziert werden. Das Verfahren ermöglicht eine bessere und schnellere Kontrolle der Dehnung des Wickelmaterials.

Bevorzugt kann das für das Wickelmaterial spezifische Spannungs-Dehnungs-Diagramm in Abhängigkeit von sich ändernden Umgebungsbedingungen während der Durchführung eines mehrere Wickelvorgänge umfassenden Arbeitsauftrages angepasst werden. Dies ermöglicht eine bessere Ausnutzung des Wickelmaterials gegenüber herkömmlichen Systemen. Herkömmliche Systeme gemäß dem Stand der Technik werden aufgrund fehlender Kenntnis der Materialeigenschaften mit einem Sicherheitsabschlag betrieben, um einen Bruch bzw. ein Reißen des Wickelmaterials aufgrund einer zu hohen Wickelspannung zu vermeiden. Das erfindungsgemäße Verfahren ermöglicht eine Regelung der Wickelspannung, die den Einfluss auf das für das Wickelmaterial spezifische Spannungs-Dehnungs-Diagramm in Abhängigkeit von sich ändernden Umgebungsbedingungen berücksichtigt. Unterschiedliche Lagen des jeweiligen Verlaufs im Spannungs-Dehnungs-Diagramm sind beispielsweise durch Temperaturänderungen beeinflusst.

Insbesondere kann der Soll-Wert in Abhängigkeit von der Anpassung des Spannungs-Dehnungs-Diagramms an sich ändernde Umgebungsbedingungen angepasst werden. Der Einfluss von Änderungen der äußeren Umgebungsbedingungen kann zeitnah berücksichtigt werden, um den Soll-Wert für die aus der Wickelspannung resultierende Kraft an neue Gegebenheiten anzupassen.

Gemäß einer bevorzugten Weiterbildung kann ein initialer Wickelvorgang durchgeführt werden, währenddessen eine sukzessive Erhöhung der von der Spannvorrichtung aufgebrachten Wickelspannung durchgeführt wird, wobei zyklisch der aus der Änderung der Wickelspannung des Wickelmaterials resultierende Ist-Kraft-Verlauf bestimmt und aufgezeichnet wird, welcher zur Bestimmung eines für aktuell vorherrschende Umgebungsbedingungen gültigen initialen Spannungs-Dehnungs-Verhaltens verwendet wird. Hierzu kann ein, insbesondere zu Beginn des Arbeitsprozesses herzustellender, erster Rundballen mit Wickelmaterial umwickelt werden. Während des Umwickelvorgangs dieses ersten Rundballens führt die sukzessive Erhöhung der von der Spannvorrichtung aufgebrachten Wickelspannung dazu, dass die Spannung im Wickelmaterial zunimmt. Das zyklische Bestimmen und Aufzeichnen des aus der Änderung der Wickelspannung des Wickelmaterials resultierenden Ist-Kraft-Verlaufs wird zur Bestimmung des initialen Spannungs-Dehnungs-Verhaltens verwendet. Der Begriff "zyklisch" kann dabei eine kontinuierliche, insbesondere in diskreten Zeitabständen, oder eine diskontinuierliche, d.h. in unregelmäßigen Zeitabständen, Ausführung des Bestimmens und Aufzeichnens bedeuten. Basierend auf diesem initialen Diagramm für das Spannungs-Dehnungs-Verhalten kann die Spannvorrichtung dann bei einem nachfolgenden Wickelvorgang für einen weiteren Rundballen derart angesteuert werden, dass sich eine Spannung des Wickelmaterials einstellt, die einem definierten, d.h. für die Materialausnutzung optimierten, Punkt im Spannungs-Dehnungs-Diagramm entspricht. Die Formulierung "initialer Wickelvorgang" ist weit gefasst zu verstehen und umfasst auch die Bestimmung des initialen Spannungs-Dehnungs-Verhaltens auch zu einem späteren Zeitpunkt während des Arbeitsprozesses, wenn eine erneute Anpassung des Spannungs-Dehnungs-Diagramms aufgrund von sich ändernden Umgebungsbedingungen erforderlich wird.

Bevorzugt kann der zumindest eine Sensor der Sensoranordnung als ein Kraftsensor ausgeführt sein, welcher dem Bereich der zumindest einen Führungsrolle zugeordnet ist, mit dem der Ist-Wert für die aus der Wickelspannung resultierende Kraft gemessen wird. Der zumindest eine Kraftsensor kann im Bereich einer oder mehrerer Führungsrollen zur Führung des Wickelmaterials angeordnet sein, die aus der Spannung des Wickelmaterials resultierende, auf die eine oder mehrere Führungsrollen wirkende Kraft zu erfassen. Denkbar ist auch, dass mehrere Kraftsensoren vorgesehen sind, die jeweils einer Führungsrolle einer aus mehreren Führungsrollen bestehenden Gruppe zugeordnet werden.

Zusätzlich oder alternativ kann der zumindest eine Sensor der Sensoranordnung als ein Kraftsensor ausgeführt sein, welcher die von einer Antriebsvorrichtung bereitzustellende Antriebskraft bestimmt, mit welcher die Spannvorrichtung betrieben wird oder der zumindest eine Sensor der Sensoranordnung kann als ein Drucksensor ausgeführt sein, mit welchem ein Hydraulikdruck bestimmt wird, mit dem die hydraulisch betriebene Spannvorrichtung beaufschlagt wird. Die Antriebskraft bzw. der Hydraulikdruck sind proportional zur Wickelspannung, die von der Spannvorrichtung auf das Wickelmaterial aufgebracht wird.

Insbesondere kann in Abhängigkeit von einer durch zumindest einen Umgebungssensor detektierten Änderung eines Umgebungsparameters, insbesondere von Luftfeuchtigkeit und/oder Umgebungstemperatur, eine Prüfung des Erfordernisses zur Anpassung des Spannungs-Dehnungs-Diagramms und/oder zur Aktualisierung des Soll-Wertes durchgeführt werden. Dem liegt die Überlegung zugrunde, dass während des Betriebes von Rundballenpressen, der sich oftmals über mehrere Stunden hinweg erstrecken kann, auf Änderungen der Umgebungsbedingungen reagiert werden sollte, um einen effizienten Betrieb zu gewährleisten. Es können mehrere Schwellwerte für die relative Luftfeuchtigkeit sowie die Umgebungstemperatur festgelegt werden. Durch das Passieren zumindest eines der Schwellwerte kann die automatische Durchführung des Prüfens des Erfordernisses der Anpassung des Spannungs-Dehnungs-Diagramms und/oder der Aktualisierung des Soll-Wertes initiiert werden. Denkbar ist aber auch, dass beim Passieren zumindest eines der Schwellwerte lediglich ein Hinweis an eine Bedienperson der Rundballenpresse ausgegeben wird, dass das Prüfen des Erfordernisses der Anpassung des Spannungs-Dehnungs-Diagramms und/oder der Aktualisierung des Soll-Wertes sinnvoll ist.

Die eingangs gestellte Aufgabe wird durch eine Rundballenpresse mit den Merkmalen des nebengeordneten Anspruches 8 gelöst.

Gemäß Anspruch 8 wird eine Rundballenpresse vorgeschlagen, umfassend:
- eine Presskammer, in der ein rotierender Ballen mit einem elastischen, bahnförmigen Wickelmaterial umwickelt wird,
- eine Steuereinheit, die dazu eingerichtet ist, eine Spannvorrichtung anzusteuern, um von zumindest einer Vorratsrolle Wickelmaterial abzuziehen,
- zumindest eine Führungsrolle zum Führen des abgezogenen Wickelmaterials während des Umwickelvorgangs, wobei die Steuereinheit dazu eingerichtet ist, der Spannvorrichtung eine einstellbare Wickelspannung vorzugeben, um den Rundballen mit dem durch die Spannvorrichtung vorgespannten Wickelmaterial zu umwickeln, wobei die Rundballenpresse eine zumindest einen Sensor umfassende Sensoranordnung umfasst, die dazu eingerichtet ist, einen Ist-Wert für eine aus der Wickelspannung resultierende Kraft zu bestimmen, dass die Steuereinheit den Ist-Wert mit einem Soll-Wert für die aus der Wickelspannung resultierende Kraft vergleicht, welchen die Steuereinheit aus einem während der Durchführung zumindest eines vorangehenden Umwickelvorgangs bestimmten und für das Wickelmaterial spezifischen Spannungs-Dehnungs-Diagramm ableitet, und dass die Steuereinheit die Spannvorrichtung in Abhängigkeit von einer durch den Vergleich von Ist-Wert und Soll-Wert bestimmten Abweichung ansteuert.

Durch die Messung der Kraft, die auf das Wickelmaterial einwirkt, welche proportional zur Spannung im Wickelmaterial ist, kann eine schnellere und genauere Kontrolle des Dehnungsverhaltens sowie der Ansteuerung der Spannvorrichtung realisiert werden. Damit verbunden lässt sich die Gefahr des Reißens des Wickelmaterials und somit Ausfallzeiten der Rundballenpresse reduzieren.

Bevorzugt kann der zumindest eine Sensor der Sensoranordnung als ein Kraftsensor ausgeführt sein, welcher im Bereich der zumindest einen Führungsrolle angeordnet ist, um den Ist-Wert für die aus der Wickelspannung resultierende Kraft zu bestimmen.

Insbesondere kann die Spannvorrichtung als eine Bremsvorrichtung mit einer, insbesondere hydraulisch oder elektromechanisch betriebenen, Antriebsvorrichtung ausgeführt sein.

Dabei kann der zumindest eine Sensor der Sensoranordnung als ein Kraftsensor ausgeführt sein, der dazu eingerichtet sein, die von der Antriebsvorrichtung bereitgestellte Antriebskraft zu bestimmen, um den Ist-Wert für die aus der Wickelspannung resultierende Kraft zu bestimmen. Alternativ kann der zumindest eine Sensor der Sensoranordnung als ein Drucksensor ausgeführt sein, der dazu eingerichtet ist, einen Hydraulikdruck, mit dem die hydraulisch betriebene Antriebsvorrichtung beaufschlagt ist, zu bestimmen, um den Ist-Wert für die aus der Wickelspannung resultierende Kraft zu bestimmen.

Gemäß einer bevorzugten Weiterbildung kann der Spannvorrichtung eine Umlenkrollenanordnung nachgeordnet sein, die mehrere Umlenkrollen umfasst, die an einer Haltevorrichtung drehbar gelagert sind, wobei die Haltevorrichtung durch eine Federkraft als Gegenkraft beim Abziehen des Wickelmaterials belastet ist, wobei ein als Potentiometer ausgeführter Sensor die Auslenkung der federbelasteten Haltevorrichtung aufgrund der aus der Wickelspannung resultierenden Kraft erfasst.

Bevorzugt kann die Rundballenpresse mit zumindest einem Umgebungssensor ausgeführt sein, der zur Detektion von Änderungen wenigstens eines Umgebungsparameters, insbesondere Luftfeuchtigkeit und/oder Umgebungstemperatur, eingerichtet ist. Somit kann dem Umstand Rechnung getragen werden, dass während des Betriebes der Rundballenpresse Änderungen der Umgebungsbedingungen Einfluss auf den Wickelvorgang haben. Zumindest ein Umgebungssensor sollte im Inneren der Rundballenpresse angeordnet sein, da die Umgebungsparameter, insbesondere die Temperatur, im Inneren der Rundballenpresse von denen außerhalb der Rundballenpresse im laufenden Betrieb in der Regel abweichen.

Insbesondere kann die Steuereinheit dazu eingerichtet sein, die Signale des zumindest einen Umgebungssensors auszuwerten und in Abhängigkeit von der Auswertung eine Anpassung des Spannungs-Dehnungs-Diagramms und/oder die Aktualisierung des Soll-Wertes vorzuschlagen und/oder, insbesondere automatisch, durchzuführen. Dazu kann ein Hinweis generiert werden, der durch eine Benutzerschnittstelle ausgegeben wird, um eine Bedienperson auf das Erfordernis hinzuweisen, eine Anpassung des Spannungs-Dehnungs-Diagramms und/oder die Aktualisierung des Soll-Wertes durchzuführen. Alternativ kann die Durchführung der Anpassung des Spannungs-Dehnungs-Diagramms und/oder die Aktualisierung des Soll-Wertes automatisch durchgeführt werden. Dabei kann die Bedienperson durch eine Ausgabe über die Benutzerschnittstelle darauf hingewiesen werden, dass eine entsprechende Anpassung und/oder Aktualisierung durchgeführt wird.

Hinsichtlich der Ausgestaltungsmöglichkeiten und der Vorteile der Rundballenpresse wird auf die Ausführungen zum vorschlagsgemäßen Verfahren verwiesen.

Die vorliegende Erfindung wird nachstehend anhand eines in den Zeichnungen dargestellten Ausführungsbeispieles näher erläutert.

Es zeigen:
- Fig. 1: exemplarisch und schematisch eine Querschnittsansicht durch eine Zuführeinrichtung einer Rundballenpresse;
- Fig. 2: exemplarisch und schematisch eine Teilansicht der Zuführeinrichtung gemäß Fig. 1;
- Fig. 3: exemplarisch und schematisch eine Detailansicht einer Umlenkrollenanordnung;
- Fig. 4: exemplarisch und schematisch eine Teilansicht der Zuführeinrichtung; und
- Fig. 5: exemplarisch ein Druck-Dehnungs-Diagramm.

Eine Rundballenpresse 1 zur Herstellung von Rundballen wird üblicherweise durch ein Zugfahrzeug wie einen Traktor (nicht dargestellt) gezogen und über eine mit dem Traktor koppelbare Antriebswelle zum Antrieb der Förder- und Verarbeitungseinrichtungen mit Energie versorgt. Die Rundballenpresse 1 nimmt im Erntebetrieb auf dem Feldboden liegendes Erntegut, beispielsweise zum Schwad gelegtes Stroh oder Gras, auf und verarbeitet dieses zu einem gepressten und anschießend mit einem elastischen, bahnförmigen Wickelmaterial umwickelten Rundballen, der nach Fertigstellung heckseitig aus der Rundballenpresse 1 ausgeworfen wird.

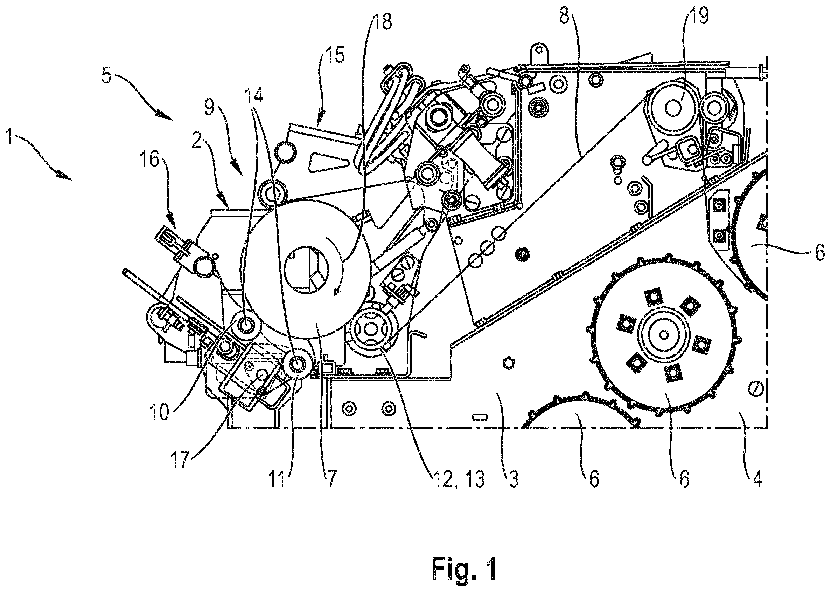

In Fig. 1 ist exemplarisch und schematisch eine Querschnittsansicht durch eine Zuführeinrichtung 5 der Rundballenpresse 1 dargestellt. Die Rundballenpresse 1 umfasst ein Gehäuse 2, das einen Innenraum 3 begrenzt. Innerhalb dieses Innenraums 3 befindet sich eine Presskammer 4, die von einer Vielzahl von Profilwalzen 6 begrenzt ist. Innerhalb der Presskammer 4 wird von der Ballenpresse 1 aufgenommenes Erntegut zu einem Rundballen gepresst. Die Presskammer 4 ist hier mit einem festen Querschnitt ausgebildet. Bei der dargestellten Rundballenpresse 1 handelt es sich in dem gezeigten Beispiel mithin um eine sogenannte Festkammerpresse. Die vorliegende Erfindung ist nicht auf solche Rundballenpressen beschränkt, sondern ebenso sind solche mit umfasst, deren Presskammer einen variablen Querschnitt aufweist.

An einer oberen Seite des Gehäuses 2 ist die Rundballenpresse 1 mit der Zuführeinrichtung 5 versehen. Mittels der Zuführeinrichtung 5 wird der Presskammer 4 auf einer Vorratsrolle 7 vorgehaltenes bahnförmiges Wickelmaterial 8 zugeführt. Bei dem Wickelmaterial 8 handelt es sich insbesondere um ein elastisches, bahnförmiges Folienmaterial. Als Wickelmaterial kommt auch ein Netzmaterial zur Anwendung. Mit dem bahnförmigen Wickelmaterial 8 kann ein fertiggestellter Rundballen umwickelt bzw. eingefasst werden. Hierzu verfügt die Zuführeinrichtung 5 über eine Rollenhalterung 9, mittels derer die jeweilige Vorratsrolle 7 gelagert ist. Die Rollenhalterung 9 weist in dem gezeigten Beispiel insgesamt drei Tragrollen 10, 11, 12 auf, wobei eine der Tragrollen 10, 11, 12 in Form einer Spannvorrichtung 13 ausgebildet ist. Damit das Wickelmaterial 8 beim Umwickeln des Rundballens straff gewickelt wird, wird das Wickelmaterial 8 mittels der Spannvorrichtung 13 unter Spannung gehalten. Hier und vorzugsweise ist die Spannvorrichtung 13 als eine Bremsvorrichtung mit einer, insbesondere hydraulisch oder elektromechanisch betriebenen, Antriebsvorrichtung ausgeführt. Die beiden anderen Tragrollen 10, 11 sind jeweils frei um ihre jeweilige Rotationsachse 14 drehbar gelagert, sodass die Vorratsrolle 7 innerhalb der Rollenhalterung 9 frei um ihre Längsachse rotieren kann.

Um die Vorratsrolle 7 in ihrer Verwendungsposition nach oben hin zu fixieren, umfasst die Zuführeinrichtung 5 ferner einen Niederhalter 15, der mit einer zugeordneten Niederhalterrolle in einem oberen Bereich der Vorratsrolle 7 wirkt. Weiterhin wirkt die Zuführeinrichtung 5 mit einer Schwenkeinrichtung 16 zusammen, mittels der die frei drehenden Tragrollen 10, 11 verschwenkbar sind. Hierzu ist die Schwenkeinrichtung 16 um eine Schwenkachse 17 relativ zu der übrigen Zuführeinrichtung 5 verschwenkbar angeordnet. Diese Schwenkachse 17 ist parallel zu den Rotationsachsen 14 der Tragrollen 10, 11 orientiert, sodass eine Verschwenkung der Schwenkeinrichtung 16 zu einer translatorischen Bewegung der Tragrollen 10, 11 auf einer Kreisbahn um die Schwenkachse 17 führt.

Ausgehend von der Rollenhalterung 9 wird im Betrieb der Zuführeinrichtung 5 das Wickelmaterial 8 von der Vorratsrolle 7 abgewickelt, wobei sich die Vorratsrolle 7 in eine Rotationsrichtung 18 um ihre Längsachse dreht. Für das Abziehen des Wickelmaterials 8 von der Vorratsrolle 7 ist eine Zuführrolle 19 der Zuführeinrichtung 5 verantwortlich, die rotierend angetrieben ist. Zum Antreiben der Zuführrolle 19 kann eine, insbesondere hydraulisch oder elektromechanisch betriebene, Antriebseinheit vorgesehen sein. Durch die Zuführrolle 19 wird das Wickelmaterial 8 in Förderrichtung FR von der Vorratsrolle 7 abgezogen. Die Spannvorrichtung 13 hält das von der Zuführrolle 19 abgezogene Wickelmaterial 8 unter einer einstellbaren Spannung.

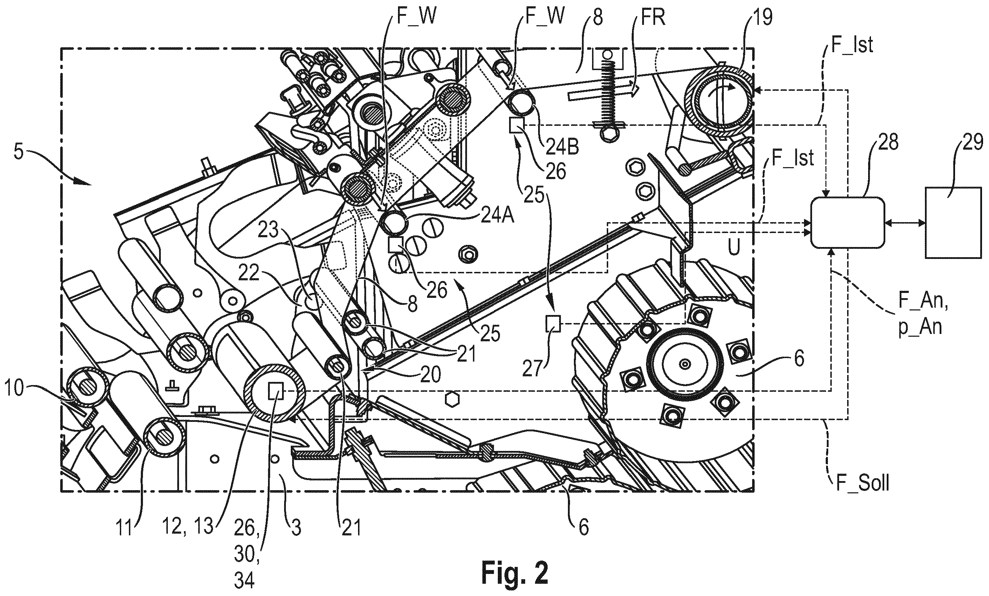

Die Darstellung in Fig. 2 zeigt exemplarisch und schematisch eine vereinfachte Teilansicht der Zuführeinrichtung 5 der Ballenpresse 1 gemäß Fig. 1. Der in Fig. 2 dargestellte Aufbau unterscheidet sich dabei durch die geänderte Führung des Wickelmaterials 8 im Innenraum 3. Der Spannvorrichtung 13 ist eine Umlenkrollenanordnung 20 nachgeordnet. Die Umlenkrollenanordnung 20 umfasst hier und vorzugsweise drei Umlenkrollen 21 die an einer Haltevorrichtung 22 jeweils drehbar gelagert sind. Die Haltevorrichtung 22 ist um eine Drehachse 23 rotierend gelagert. Die drei Umlenkrollen 21 sind koaxial zur Drehachse 23 der Haltevorrichtung 22 angeordnet. Die Haltevorrichtung 22 ist gegenüber dem Gehäuse 2 relativbeweglich angeordnet.

Das von der Spannvorrichtung 13 kommende Wickelmaterial 8 wird um zwei der Umlenkrollen 21 abschnittsweise mäandernd herumgeführt. Im Anschluss wird das Wickelmaterial 8 über Führungsrollen 24A, 24B gelenkt, bevor das Wickelmaterial 8 die Zuführrolle 19 erreicht. Die Spannvorrichtung 13 übt eine der Förderrichtung FR des Wickelmaterials 8 entgegengerichtete Kraft aus, um das Wickelmaterial 8 mit einer einstellbaren, insbesondere materialspezifischen, Wickelspannung auf der Umfangsfläche des Rundballens abzulegen. Durch die von der Spannvorrichtung 13 aufgebrachte Wickelspannung erfährt das Wickelmaterial 8 eine Dehnung. Die Führungsrollen 24A, 24B sind zueinander beabstandet und in unterschiedlichen Höhen angeordnet. Die in Förderrichtung FR gesehen der Umlenkrollenanordnung 20 unmittelbar nachgeordnete Führungsrolle 24A ist tiefer angeordnet als die nachfolgende Führungsrolle 24B. Das Wickelmaterial 8 erfährt durch die Führungsrollen 24A, 24B jeweils eine abschnittsweise Umlenkung in deren Umfangsrichtung. Dabei übt das durch die Spannvorrichtung 13 mit der Wickelspannung gespannte Wickelmaterial 8 eine daraus resultierende Kraft F_W auf die jeweilige Führungsrolle 24A, 24B aus. Exemplarisch dargestellt sind jeweils einzelne Führungsrollen 24A, 24B. Es können auch Gruppen mit mehreren Führungsrollen 24A, 24B vorgesehen sein.

Die Ballenpresse 1 umfasst eine zumindest einen Sensor 26 umfassende Sensoranordnung 25. Der zumindest eine Sensor 26 ist hier und vorzugsweise als Kraftsensor ausgeführt. Der zumindest eine Sensor 26 ist hier und vorzugsweise dem Bereich zumindest einer der beiden Führungsrollen 24A, 24B zugeordnet. Die Darstellung zeigt exemplarisch die Zuordnung des zumindest einen Sensors 26 zur Führungsrolle 24A bzw. 24B. Denkbar ist aber auch, dass jeder der beiden Führungsrollen 24A, 24B ein Sensor 26 zugeordnet ist.

Weiterhin kann die Rundballenpresse 1 mit zumindest einem Umgebungssensor 27 ausgeführt sein, der zur Detektion von Änderungen von wenigstens einem Umgebungsparameter U, insbesondere Luftfeuchtigkeit und/oder Umgebungstemperatur, eingerichtet ist. Insbesondere ist zumindest ein Umgebungssensor 27 im Gehäuse 3 der Rundballenpresse 1 angeordnet.

Der zumindest eine Sensor 26 sowie der zumindest eine Umgebungssensor 27 sind mit einer Steuereinheit 28 signaltechnisch verbunden. Weiterhin ist die Steuereinheit 28 mit der Spannvorrichtung 13 und/oder der Zuführrolle 19 respektive ihrer Antriebsvorrichtung bzw. Antriebseinheit signaltechnisch verbunden, um diese anzusteuern. Die Steuereinheit 28 kann bevorzugt mit einer Benutzerschnittstelle 29 verbunden bzw. ausgeführt sein. Die Benutzerschnittstelle 29 ermöglicht es einer Bedienperson der Rundballenpresse 1, sich Informationen über den Betriebszustand anzeigen zu lassen sowie Eingaben vorzunehmen. Die Steuereinheit 28 umfasst eine Recheneinheit sowie eine Speichereinheit. In der Speichereinheit können für verschiedene Wickelmaterialien 8 materialspezifische Spannungs-Dehnungs-Diagramm durch die Recheneinheit abrufbar hinterlegt sein.

Die Steuereinheit 28 ist dazu eingerichtet, der Spannvorrichtung 13 eine Wickelspannung vorzugeben und diese im laufenden Betrieb zu regeln. Ein effizienter Betrieb beim Umwickeln eines Rundballens wird erreicht, wenn durch die vorgegebene Wickelspannung eine große Dehnung des Wickelmaterials 8 erreicht wird, ohne dass es dabei zum Reißen kommt. Das Dehnungsverhalten des Wickelmaterials 8 ist materialspezifisch und wird zudem durch die vorherrschenden Umgebungsbedingungen, insbesondere Umgebungstemperatur und/oder Luftfeuchtigkeit als Umgebungsparameter U, beeinflusst. Mit zunehmender Umgebungstemperatur sinkt die für eine gewünschte Dehnung auf das Wickelmaterial 8 aufzubringende Wickelspannung.

Das erfindungsgemäße Verfahren sieht vor, dass durch die zumindest einen Sensor 26 umfassende Sensoranordnung 25 ein Ist-Wert F_Ist für die aus der Wickelspannung resultierende Kraft F_W bestimmt wird. Die Messung erfolgt dabei entlang des Förderweges zwischen der Vorratsrolle 7 und der Zuführrolle 19. Der Ist-Wert F_Ist wird mit einem Soll-Wert F_Soll für die aus der Wickelspannung resultierende Kraft F_W verglichen, welcher aus einem während der Durchführung zumindest eines vorangehenden Umwickelvorgangs bestimmten und für das Wickelmaterial 8 spezifischen Spannungs-Dehnungs-Diagramm abgeleitet wird. In Abhängigkeit von einer durch den Vergleich von Ist-Wert F_Ist und Soll-Wert F_Soll bestimmten Abweichung wird die Spannvorrichtung 13 durch die Steuereinheit 28 angesteuert.

Dabei kann das für das Wickelmaterial 8 spezifische Spannungs-Dehnungs-Diagramm in Abhängigkeit von sich ändernden Umgebungsbedingungen während der Durchführung eines mehrere Wickelvorgänge umfassenden Arbeitsauftrages angepasst werden. Hierzu kann der Soll-Wert F_Soll in Abhängigkeit von der Anpassung des Spannungs-Dehnungs-Diagramms an sich ändernde Umgebungsbedingungen angepasst werden.

Bei Inbetriebnahme der Rundballenpresse 1 zu Beginn eines Arbeitsauftrages auf einem Feld ist es vorteilhaft, wenn ein initialer Wickelvorgang durchgeführt wird. Während der Durchführung des initialen Wickelvorgangs wird eine sukzessive Erhöhung der von der Spannvorrichtung 13 aufgebrachten Wickelspannung durchgeführt. Dabei wird zyklisch der aus der Änderung der Wickelspannung des Wickelmaterials 8 resultierende Ist-Kraft-Verlauf durch die Steuereinheit 28 bestimmt und aufgezeichnet, welcher zur Bestimmung eines für aktuell vorherrschende Umgebungsbedingungen gültigen initialen Spannungs-Dehnungs-Diagramms verwendet wird. Der durch die Steuereinheit 28 einzustellende Soll-Wert F_Soll wird aus diesem initialen Spannungs-Dehnungs-Diagramms abgeleitet.

Im Verlauf eines Arbeitstages können sich die Umgebungsbedingungen in der Weise ändern, dass eine Anpassung des Spannungs-Dehnungs-Diagramms an sich ändernde Umgebungsbedingungen, beispielsweise eine höhere Umgebungstemperatur, erforderlich wird. Um eine solche Situation zu detektieren kann in Abhängigkeit von einer durch den zumindest einen Umgebungssensor 27 detektierten Änderung eines Umgebungsparameters U eine Prüfung des Erfordernisses zur Anpassung des Spannungs-Dehnungs-Diagramms und/oder die Aktualisierung des Soll-Wertes F_Soll durchgeführt werden. Hierzu werden die Verfahrensschritte wiederholt, welche bei der Durchführung des initialen Wickelvorgangs durchgeführt werden.

Um zu beurteilen, ob das Erfordernis zur Anpassung des Spannungs-Dehnungs-Diagramms und/oder die Aktualisierung des Soll-Wertes F_Soll besteht, können mehrere Schwellwerte für die Umgebungsparameter U, die relative Luftfeuchtigkeit sowie die Umgebungstemperatur, festgelegt werden. Durch das Passieren zumindest eines der Schwellwerte kann eine automatische Durchführung des Prüfens des Erfordernisses der Anpassung des Spannungs-Dehnungs-Diagramms und/oder der Aktualisierung des Soll-Wertes F_Soll initiiert werden. Denkbar ist aber auch, dass beim Passieren zumindest eines der Schwellwerte lediglich ein Hinweis an die Bedienperson der Rundballenpresse 1 ausgegeben wird, dass das Prüfen des Erfordernisses der Anpassung des Spannungs-Dehnungs-Diagramms und/oder der Aktualisierung des Soll-Wertes F_Soll sinnvoll ist. Entsprechend kann die Bedienperson den Vorgang zur Anpassung des Spannungs-Dehnungs-Diagramms und/oder der Aktualisierung des Soll-Wertes F_Soll manuell veranlassen.

Alternativ oder zusätzlich kann die Sensoranordnung 25 zumindest einen Kraftsensor 30 umfassen, welcher die von der Antriebsvorrichtung bereitzustellende Antriebskraft F_An bestimmt, mit welcher die Spannvorrichtung 13 betrieben wird. Aus der erforderlichen Antriebskraft F_An kann ebenfalls auf die aktuell eingestellte Wickelspannung geschlossen werden. Die Steuereinheit 28 kann somit alternativ die Antriebskraft F_An anstelle des Ist-Wertes F_Ist oder die Antriebskraft F_An zusätzlich zu diesem verwenden, um die Einhaltung der Wickelspannung respektive des eingestellten Soll-Wertes F_Soll zu überwachen und die Antriebsvorrichtung der Spannvorrichtung 13 anzusteuern.

Gemäß einer weiteren Alternative kann bei einer hydraulisch betätigten Bremsvorrichtung als Spannvorrichtung 13 durch einen Drucksensor 34 ein erforderlicher Hydraulikdruck p_An gemessen werden, mit dem die hydraulisch betriebene Antriebsvorrichtung der hydraulisch betätigten Bremsvorrichtung beaufschlagt wird, um die Wickelspannung auf das Wickelmaterial 8 aufzubringen. Aus dem hierfür erforderlichen Hydraulikdruck p_An kann ebenfalls auf die aktuell eingestellte Wickelspannung geschlossen werden. Die Steuereinheit 28 kann somit alternativ oder zusätzlich den Hydraulikdruck p_An anstelle des Ist-Wertes F_Ist verwenden, um die Einhaltung der Wickelspannung respektive des eingestellten Soll-Wertes F_Soll zu überwachen und die Antriebsvorrichtung der Spannvorrichtung 13 anzusteuern.

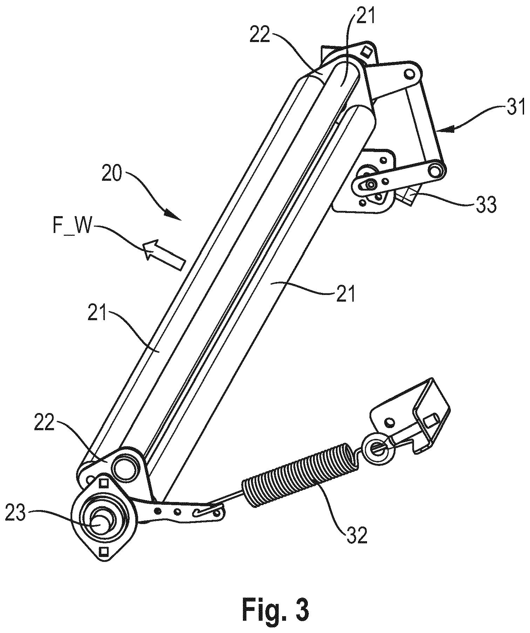

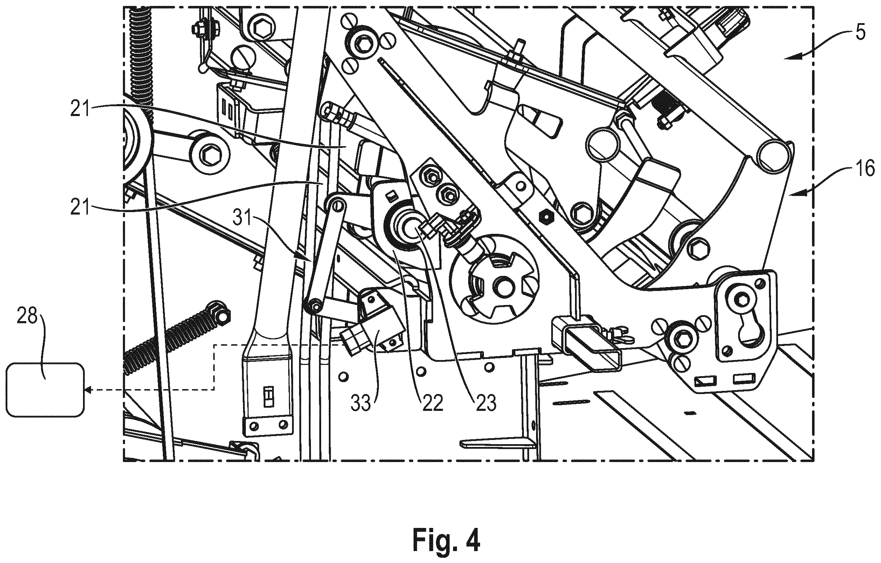

Fig. 3 stellt exemplarisch und schematisch eine Detailansicht der Umlenkrollenanordnung 20 dar. In Fig. 4 ist exemplarisch und schematisch eine Teilansicht der Umlenkrollenanordnung 20 der Zuführeinrichtung 5 dargestellt.

Die Umlenkrollenanordnung 20 ist durch eine Federkraft, hier mittels einer Zugfeder 32 erzeugt, als Gegenkraft beim Abziehen des Wickelmaterials 8 von der Vorratsrolle 7 und dem Umlenken um die Umlenkrollen 21 belastet bzw. vorgespannt. Dabei ist ein Ende der Zugfeder 32 an einem Ende der Drehachse 23 mit dieser verbunden und das andere Ende der Zugfeder 32 mit dem Gehäuse 2. Am der Zugfeder 32 gegenüberliegenden Ende der Drehachse 23 befindet sich eine Hebelanordnung 31, welche eine Auslenkung der Drehachse 23 aufgrund der Wickelspannung erfährt und auf einen Sensor 33, hier und vorzugsweise ein Potentiometer, überträgt. Aus der durch die Wickelspannung des Wickelmaterials 8 hervorgerufenen Auslenkung der Drehachse 23 lässt sich der Ist-Wert F_Ist für die auf die Umlenkrollen 21 ausgeübte Kraft F_W bestimmen. Zur Auswertung der von dem Sensor 33 bereitgestellten Signale ist dieser mit der Steuereinheit 28 signaltechnisch verbunden.

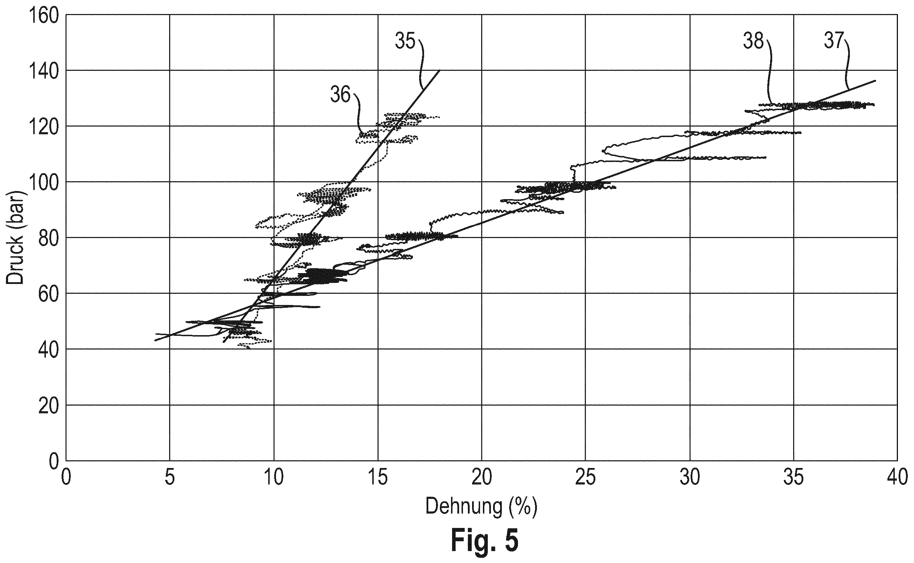

In Fig. 5 ist exemplarisch ein Druck-Dehnungs-Diagramm dargestellt, welches jeweils zwei Verläufe für zwei unterschiedliche Wickelmaterialien zeigt. Mit Bezugszeichen 35 ist ein berechneter linearer Verlauf für das erste Wickelmaterial bezeichnet und mit 36 ein sich tatsächlich einstellender Verlauf für das erste Wickelmaterial, welcher durch die Umgebungsparameter U beeinflusst ist. Mit Bezugszeichen 37 ist ein berechneter linearer Verlauf für das zweite Wickelmaterial bezeichnet und mit 38 ein sich tatsächlich einstellender Verlauf für das zweite Wickelmaterial. Der Bestimmung der Verläufe 35 bzw. 37 liegt dabei jeweils die Druckmessung mittels des Drucksensors 34 zugrunde, welcher den Hydraulikdruck erfasst, mit dem die als hydraulisch betätigte Bremsvorrichtung ausgeführte Spannvorrichtung 13 beaufschlagt ist, um die Wickelspannung zu erzeugen.

**Bezugszeichenliste**

| | | | |
|---|---|---|---|
| 1 | Rundballenpresse | 33 | Sensor |
| 2 | Gehäuse | 34 | Drucksensor |
| 3 | Innenraum | 35 | Berechneter Verlauf |
| 4 | Presskammer | 36 | Verlauf |
| 5 | Zuführeinrichtung | 37 | Berechneter Verlauf |
| 6 | Profilwalzen | 38 | Verlauf |
| 7 | Vorratsrolle | F_An | Antriebskraft |
| 8 | Wickelmaterial | F_Ist | Ist-Wert |
| 9 | Rollenhalterung | F_Soll | Soll-Wert |
| 10 | Tragrolle | F_W | Resultierende Kraft |
| 11 | Tragrolle | FR | Förderrichtung |
| 12 | Tragrolle | P_An | Hydraulikdruck |
| 13 | Spannvorrichtung | U | Umgebungsparameter |
| 14 | Rotationsachse | | |
| 15 | Niederhalter | | |
| 16 | Schwenkeinrichtung | | |
| 17 | Schwenkachse | | |
| 18 | Rotationsrichtung | | |
| 19 | Zuführrolle | | |
| 20 | Umlenkrollenanordnung | | |
| 21 | Umlenkrolle | | |
| 22 | Haltevorrichtung | | |
| 23 | Drehachse | | |
| 24A | Führungsrolle | | |
| 24B | Führungsrolle | | |
| 25 | Sensoranordnung | | |
| 26 | Sensor | | |
| 27 | Umgebungssensor | | |
| 28 | Steuereinheit | | |
| 29 | Benutzerschnittstelle | | |
| 30 | Kraftsensor | | |
| 31 | Hebelanordnung | | |
| 32 | Zugfeder | | |

## Patentansprüche

1. Verfahren zur Regelung eines Umwickelvorgangs eines in einer Presskammer (4) einer Rundballenpresse (1) rotierenden Rundballens mit einem elastischen, bahnförmigen Wickelmaterial (8), welches von zumindest einer Vorratsrolle (7) mittels einer durch eine Steuereinheit (28) angesteuerten Spannvorrichtung (13) abgezogen und während des Umwickelvorgangs durch zumindest eine Führungsrolle (24A, 24B) geführt wird, wobei der Rundballen mit dem durch die Spannvorrichtung (13) vorgespannten Wickelmaterial (8) mit einer durch die Steuereinheit (28) vorgegebenen einstellbaren Wickelspannung umwickelt wird, **dadurch gekennzeichnet, dass** durch eine zumindest einen Sensor (26) umfassende Sensoranordnung (25) ein Ist-Wert (F_Ist) für eine aus der Wickelspannung resultierende Kraft (F_W) bestimmt wird, dass der Ist-Wert (F_Ist) mit einem Soll-Wert (F_Soll) für die aus der Wickelspannung resultierende Kraft (F_W) verglichen wird, welcher aus einem während der Durchführung zumindest eines vorangehenden Umwickelvorgangs bestimmten und für das Wickelmaterial (8) spezifischen Spannungs-Dehnungs-Diagramm abgeleitet wird, wobei in Abhängigkeit von einer durch den Vergleich von Ist-Wert (F_Ist) und Soll-Wert (F_Soll) bestimmten Abweichung die Spannvorrichtung (13) angesteuert wird.

2. Verfahren nach Anspruch 1, **dadurch gekennzeichnet, dass** das für das Wickelmaterial (8) spezifische Spannungs-Dehnungs-Diagramm in Abhängigkeit von sich ändernden Umgebungsbedingungen während der Durchführung eines mehrere Wickelvorgänge umfassenden Arbeitsauftrages angepasst wird.

3. Verfahren nach Anspruch 2, **dadurch gekennzeichnet, dass** der Soll-Wert (F_Soll) in Abhängigkeit von der Anpassung des Spannungs-Dehnungs-Diagramms an sich ändernde Umgebungsbedingungen angepasst wird.

4. Verfahren nach einem der Ansprüche 1 bis 3, **dadurch gekennzeichnet, dass** ein initialer Wickelvorgang durchgeführt wird, währenddessen eine sukzessive Erhöhung der von der Spannvorrichtung (13) aufgebrachten Wickelspannung durchgeführt wird, wobei zyklisch der aus der Änderung der Wickelspannung des Wickelmaterials (8) resultierende Ist-Kraft-Verlauf bestimmt und aufgezeichnet wird, welcher zur Bestimmung eines für aktuell vorherrschende Umgebungsbedingungen gültigen initialen Spannungs-Dehnungs-Diagramms verwendet wird.

5. Verfahren nach einem der vorangehenden Ansprüche, **dadurch gekennzeichnet, dass** der zumindest eine Sensor (26) der Sensoranordnung (25) als ein Kraftsensor ausgeführt ist, welcher dem Bereich der zumindest einen Führungsrolle (24A, 24B) zugeordnet ist, mit dem der Ist-Wert (F_Ist) für die aus der Wickelspannung resultierende Kraft (F_W) gemessen wird.

6. Verfahren nach einem der vorangehenden Ansprüche, **dadurch gekennzeichnet, dass** der zumindest eine Sensor (26) der Sensoranordnung (25) als ein Kraftsensor (30) ausgeführt ist, welcher die von einer Antriebsvorrichtung bereitzustellende Antriebskraft (F_An) bestimmt, mit welcher die Spannvorrichtung (13) betrieben wird, oder dass der zumindest eine Sensor (26) der Sensoranordnung (25) als ein Drucksensor (34) ausgeführt ist, mit welchem ein Hydraulikdruck (p_An) bestimmt wird, mit dem die Spannvorrichtung (13) beaufschlagt wird.

7. Verfahren nach einem der vorangehenden Ansprüche, **dadurch gekennzeichnet, dass** in Abhängigkeit von einer durch zumindest einen Umgebungssensor (27) detektierten Änderung eines Umgebungsparameters (U), insbesondere Luftfeuchtigkeit und/oder Umgebungstemperatur, eine Prüfung des Erfordernisses zur Anpassung des Spannungs-Dehnungs-Diagramms und/oder zur Aktualisierung des Soll-Wertes (F_Soll) durchgeführt wird.

8. Rundballenpresse (1), umfassend:
- eine Presskammer (4), in der ein rotierender Rundballen mit einem elastischen, bahnförmigen Wickelmaterial (8) umwickelt wird,
- eine Steuereinheit (28), die dazu eingerichtet ist, eine Spannvorrichtung (13) anzusteuern, um von zumindest einer Vorratsrolle (7) Wickelmaterial (8) abzuziehen,
- zumindest eine Führungsrolle (24A, 24B) zum Führen des abgezogenen Wickelmaterials (8) während des Umwickelvorgangs,
wobei die Steuereinheit (28) dazu eingerichtet ist, der Spannvorrichtung (13) eine einstellbare Wickelspannung vorzugeben, um den Rundballen mit dem durch die Spannvorrichtung (13) vorgespannten Wickelmaterial (8) zu umwickeln, **dadurch gekennzeichnet, dass** die Rundballenpresse (1) eine zumindest einen Sensor (26) umfassende Sensoranordnung (25) umfasst, die dazu eingerichtet ist, einen Ist-Wert (F_Ist) für eine aus der Wickelspannung resultierende Kraft (F_W) zu bestimmen, dass die Steuereinheit (28) den Ist-Wert (F_Ist) mit einem Soll-Wert (F_Soll) für die aus der Wickelspannung resultierende Kraft (F_W) vergleicht, welchen die Steuereinheit (28) aus einem während der Durchführung zumindest eines vorangehenden Umwickelvorgangs bestimmten und für das Wickelmaterial (8) spezifischen Spannungs-Dehnungs-Diagramm ableitet, und dass die Steuereinheit (28) die Spannvorrichtung (13) in Abhängigkeit von einer durch den Vergleich von Ist-Wert (F_Ist) und Soll-Wert (F_Soll) bestimmten Abweichung ansteuert.

9. Rundballenpresse (1) nach Anspruch 8, **dadurch gekennzeichnet, dass** der zumindest eine Sensor (26) der Sensoranordnung (25) als ein Kraftsensor ausgeführt ist, welcher im Bereich der zumindest einen Führungsrolle (24A, 24B) angeordnet ist, um den Ist-Wert (F_Ist) für die aus der Wickelspannung resultierende Kraft (F_W) zu bestimmen.

10. Rundballenpresse (1) nach Anspruch 8 oder 9, **dadurch gekennzeichnet, dass** die Spannvorrichtung (13) als eine Bremsvorrichtung mit einer, insbesondere hydraulisch oder elektromechanisch betriebenen, Antriebsvorrichtung ausgeführt ist.

11. Rundballenpresse (1) nach Anspruch 10, **dadurch gekennzeichnet, dass** der zumindest eine Sensor (26) der Sensoranordnung (25) als Kraftsensor (30) ausgeführt ist, der dazu eingerichtet ist, die von der Antriebsvorrichtung bereitgestellte Antriebskraft zu bestimmen, oder der zumindest eine Sensor (26) der Sensoranordnung (25) als ein Drucksensor (34) ausgeführt ist, der dazu eingerichtet ist, einen Hydraulikdruck (p_An), mit dem die hydraulisch betriebene Antriebsvorrichtung beaufschlagt ist, zu bestimmen, um den Ist-Wert (F_Ist) für die aus der Wickelspannung resultierende Kraft (F_W) zu bestimmen.

12. Rundballenpresse (1) nach einem der Ansprüche 8 bis 11, **dadurch gekennzeichnet, dass** der Spannvorrichtung (13) eine Umlenkrollenanordnung (20) nachgeordnet ist, die mehrere Umlenkrollen (21) umfasst, die an einer Haltevorrichtung (22) drehbar gelagert sind, wobei die Haltevorrichtung (22) durch eine Federkraft als Gegenkraft beim Abziehen des Wickelmaterials (8) belastet ist, wobei ein als Potentiometer ausgeführter Sensor (33) die Auslenkung der federbelasteten Haltevorrichtung (22) aufgrund der aus der Wickelspannung resultierenden Kraft (F_W) erfasst.

13. Rundballenpresse (1) nach einem der Ansprüche 8 bis 12, **dadurch gekennzeichnet, dass** die Rundballenpresse (1) mit zumindest einem Umgebungssensor (27) ausgeführt ist, der zur Detektion von Änderungen wenigstens eines Umgebungsparametes (U), insbesondere Luftfeuchtigkeit und/oder Umgebungstemperatur, eingerichtet ist.

14. Rundballenpresse (1) nach Anspruch 13, **dadurch gekennzeichnet, dass** die Steuereinheit (28) dazu eingerichtet ist, die Signale des zumindest einen Umgebungssensors (27) auszuwerten und in Abhängigkeit von der Auswertung eine Anpassung des Spannungs-Dehnungs-Diagramms und/oder die Aktualisierung des Soll-Wertes (F_Soll) vorzuschlagen und/oder, insbesondere automatisch, durchzuführen.

## Claims

1. A method for the feedback control of a procedure for wrapping a round bale rotating in a bale chamber (4) of a round baler (1) with an elastic, web-shaped wrapping material (8) which is withdrawn from at least one supply roll (7) by means of a tensioning device (13) controlled by a control unit (28) and guided during the wrapping procedure through at least one guide roller (24A, 24B), wherein the round bales are wrapped with the wrapping material (8) which has been pre-tensioned by the tensioning device (13) with an adjustable wrapping tension set by the control unit (28), **characterized in that** an actual value (F_Ist) for a force (F_W) resulting from the wrapping tension is determined by a sensor assembly (25) comprising at least one sensor (26), **in that** the actual value (F_Ist) is compared with a target value (F_Soll) for the force (F_W) resulting from the wrapping tension which is derived from a tension-elongation diagram determined during the implementation of at least one preceding wrapping procedure and which is specific to the wrapping material (8), wherein the tensioning device (13) is controlled as a function of a deviation determined from the comparison of the actual value (F_Ist) and the target value (F_Soll).

2. The method according to claim 1, **characterized in that** the tension-elongation diagram which is specific to the wrapping material (8) is adjusted as a function of changing environmental conditions during the implementation of a working assignment comprising a plurality of wrapping procedures.

3. The method according to claim 2, **characterized in that** the target value (F_Soll) is adjusted as a function of the adjustment of the tension-elongation diagram to changing environmental conditions.

4. The method according to one of claims 1 to 3, **characterized in that** an initial wrapping procedure is carried out, during which a gradual increase in the wrapping tension applied by the tensioning device (13) is carried out, wherein the actual force curve resulting from the change in the wrapping tension of the wrapping material (8) is determined and recorded cyclically, which is used in order to determine an initial tension-elongation diagram which is valid for currently prevailing environmental conditions.

5. The method according to one of the preceding claims, **characterized in that** the at least one sensor (26) of the sensor assembly (25) is constructed as a force sensor which is associated with the region of the at least one guide roller (24A, 24B), with which the actual value (F_Ist) for the force (F_W) resulting from the wrapping tension is measured.

6. The method according to one of the preceding claims, **characterized in that** the at least one sensor (26) of the sensor assembly (25) is constructed as a force sensor (30) which determines the driving force (F_An) with which the tensioning device (13) is operated which is to be provided from a drive device, or **in that** the at least one sensor (26) of the sensor assembly (25) is constructed as a pressure sensor (34), with which a hydraulic pressure (p_An) which is applied to the tensioning device (13) is determined.

7. The method according to one of the preceding claims, **characterized in that** a test of the necessity for adjustment of the tension-elongation diagram and/or for updating the target value (F_Soll) is carried out as a function of a change in an environmental parameter (U), in particular humidity in the air and/or environmental temperature, detected by at least one environmental sensor (27).

8. A round baler (1), comprising:
- a bale chamber (4), in which a rotating round bale is wrapped with an elastic, web-shaped wrapping material (8),
- a control unit (28), which is configured to control a tensioning device (13) in order to withdraw wrapping material (8) from at least one supply roll (7),
- at least one guide roller (24A, 24B) for guiding the withdrawn wrapping material (8) during the wrapping procedure,
wherein the control unit (28) is configured to set an adjustable wrapping tension for the tensioning device (13) in order to wrap the round bale with the wrapping material (8) which has been pre-tensioned by the tensioning device (13), **characterized in that** the round baler (1) comprises a sensor assembly (25) comprising at least one sensor (26), which is configured to determine an actual value (F_Ist) for a force (F_W) resulting from the wrapping tension, **in that** the control unit (28) compares the actual value (F_Ist) with a target value (F_Soll) for the force (F_W) resulting from the wrapping tension, which the control unit (28) derives from a tension-elongation diagram determined during the implementation of at least one preceding wrapping procedure and which is specific to the wrapping material (8), and **in that** the control unit (28) controls the tensioning device (13) as a function of a deviation determined from the comparison of the actual value (F_Ist) and target value (F_Soll).

9. The round baler (1) according to claim 8, **characterized in that** the at least one sensor (26) of the sensor assembly (25) is constructed as a force sensor, which is disposed in the region of the at least one guide roller (24A, 24B) in order to determine the actual value (F_Ist) for the force (F_W) resulting from the wrapping tension.

10. The round baler (1) according to claim 8 or claim 9, **characterized in that** the tensioning device (13) is configured as a brake device with a drive device which in particular is operated hydraulically or electromechanically.

11. The round baler (1) according to claim 10, **characterized in that** the at least one sensor (26) of the sensor assembly (25) is constructed as a force sensor (30) which is configured to determine the driving force provided by the drive device, or the at least one sensor (26) of the sensor assembly (25) is constructed as a pressure sensor (34) which is configured to determine a hydraulic pressure (p_An) applied to the hydraulically operated drive device in order to determine the actual value (F_Ist) for the force (F_W) resulting from the wrapping tension.

12. The round baler (1) according to one of claims 8 to 11, **characterized in that** a deflecting roller assembly (20) which comprises a plurality of deflecting rollers (21) mounted for rotation on a retaining device (22) is disposed downstream of the tensioning device (13), wherein the retaining device (22) is loaded by a spring force as a counteracting force during the withdrawal of the wrapping material (8), wherein a sensor (33) constructed as a potentiometer detects the deflection of the spring-loaded retaining device (22) due to the force (F_W) resulting from the wrapping tension.

13. The round baler (1) according to one of claims 8 to 12, **characterized in that** the round baler (1) is constructed with at least one environmental sensor (27) which is configured for the detection of variations in at least one environmental parameter (U), in particular humidity in the air and/or environmental temperature.

14. The round baler (1) according to claim 13, **characterized in that** the control unit (28) is configured to analyse the signals from the at least one environmental sensor (27) and, as a function of the analysis, to propose and/or carry out, in particular automatically, an adjustment of the tension-elongation diagram and/or the updating of the target value (F_Soll).

## Revendications

1. Procédé de régulation d'une opération d'enrubannage d'une balle ronde tournant dans une chambre de pressage (4) d'une presse à balles rondes (1), avec un matériau d'enrubannage (8) élastique en forme de bande qui est dévidé à partir d'au moins un rouleau d'alimentation (7), à l'aide d'un dispositif d'étirage (13) activé par une unité de commande (28), et est guidé par au moins un rouleau de guidage (24A, 24B) pendant l'opération d'enrubannage, la balle ronde étant enveloppée avec le matériau d'enrubannage (8) pré-étiré par le dispositif d'étirage (13), avec une tension d'enrubannage réglable prédéfinie par l'unité de commande (28), **caractérisé en ce qu'**un dispositif à capteur (25), comportant au moins un capteur (26), détermine une valeur réelle (F_Ist) pour une force (F_W) résultant de la tension d'enrubannage, **en ce que** la valeur réelle (F_Ist) est comparée avec une valeur de consigne (F_Soll) pour la force (F_W) résultant de la tension d'enrubannage, qui est dérivée d'un diagramme tension-allongement déterminé pendant la réalisation d'au moins une opération d'enrubannage précédente et spécifique du matériau d'enrubannage (8), le dispositif d'étirage (13) étant activé en fonction d'un écart déterminé par la comparaison de la valeur réelle (F_Ist) et de la valeur de consigne (F_Soll).

2. Procédé selon la revendication 1, **caractérisé en ce que** le diagramme tension-allongement spécifique du matériau d'enrubannage (8) est adapté en fonction de conditions d'environnement qui varient pendant l'exécution d'une tâche comportant plusieurs opérations d'en-rubannage.

3. Procédé selon la revendication 2, **caractérisé en ce que** le la valeur de consigne (F_Soll) est adaptée en fonction de l'adaptation du diagramme tension-allongement à des conditions d'environnement qui varient.

4. Procédé selon une des revendications 1 à 3, **caractérisé en ce qu'**une opération d'enrubannage initiale est effectuée, au cours de laquelle est réalisée une augmentation successive de la tension d'enru-bannage produite par le dispositif d'étirage (13), où l'évolution de la force réelle, résultant de la variation de la tension d'enrubannage du matériau d'enrubannage (8), est déterminée et enregistrée de manière cyclique et est utilisée pour déterminer un diagramme tension-allongement initial qui est valable pour les conditions d'environnement actuellement existantes.

5. Procédé selon une des revendications précédentes, **caractérisé en ce que** le capteur (26), au nombre d'au moins un, du dispositif à capteur (25) est réalisé sous forme de capteur de force qui est associé à la région du rouleau de guidage (24A, 24B), au nombre d'au moins un, et avec lequel on mesure la valeur réelle (F_Ist) pour la force (F_W) résultant de la tension d'enrubannage.

6. Procédé selon une des revendications précédentes, **caractérisé en ce que** le capteur (26), au nombre d'au moins un, du dispositif à capteur (25) est réalisé sous forme de capteur de force (30) qui détermine la force d'entraînement (F_An) devant être fournie par un dispositif d'entraînement et avec laquelle fonctionne le dispositif d'étirage (13), ou **en ce que** le capteur (26), au nombre d'au moins un, du dispositif à capteur (25) est réalisé sous forme de capteur de pression (34) avec lequel on détermine une pression hydraulique (p_An) qui est appliquée au dispositif d'étirage (13).

7. Procédé selon une des revendications précédentes, **caractérisé en ce que**, en fonction d'une variation d'un paramètre d'environnement (U), notamment de l'humidité de l'air et/ou de la température ambiante, détectée par au moins un capteur d'environnement (27), un contrôle est effectué pour déterminer s'il est nécessaire d'adapter le diagramme tension-allongement et/ou de mettre à jour la valeur de consigne (F_Soll).

8. Presse à balles rondes (1), comprenant :
- une chambre de pressage (4) dans laquelle une balle ronde en rotation est enveloppée avec un matériau d'enrubannage (8) élastique en forme de bande,
- une unité de commande (28) qui est conçue pour activer un dispositif d'étirage (13) aux fins de dévider du matériau d'enrubannage (8) à partir d'au moins un rouleau d'alimentation (7),
- au moins un rouleau de guidage (24A, 24B) destiné à guider le matériau d'enrubannage (8) dévidé pendant l'opération d'enrubannage,
l'unité de commande (28) étant conçue pour prédéfinir une tension d'enrubannage réglable pour le dispositif d'étirage (13), aux fins d'enrouler la balle ronde avec le matériau d'enrubannage (8) pré-étiré par le dispositif d'étirage (13), **caractérisée en ce que** la presse à balles rondes (1) comprend un dispositif à capteur (25), comportant au moins un capteur (26), qui est conçu pour déterminer une valeur réelle (F_Ist) pour une force (F_W) résultant de la tension d'enrubannage, **en ce que** l'unité de commande (28) compare la valeur réelle (F_Ist) avec une valeur de consigne (F_Soll) pour la force (F_W) résultant de la tension d'enrubannage, que l'unité de commande (28) dérive d'un diagramme tension-allongement déterminé pendant la réalisation d'au moins une opération d'enrubannage précédente et spécifique du matériau d'enru-bannage (8), et **en ce que** l'unité de commande (28) active le dispositif d'étirage (13) en fonction d'un écart déterminé par la comparaison de la valeur réelle (F_Ist) et de la valeur de consigne (F_Soll).

9. Presse à balles rondes (1) selon la revendication 8, **caractérisée en ce que** le capteur (26), au nombre d'au moins un, du dispositif à capteur (25) est réalisé sous forme de capteur de force qui est disposé dans la région du rouleau de guidage (24A, 24B), au nombre d'au moins un, aux fins de déterminer la valeur réelle (F_Ist) pour la force (F_W) résultant de la tension d'enrubannage.

10. Presse à balles rondes (1) selon la revendication 8 ou 9, **caractérisée en ce que** le dispositif d'étirage (13) est réalisé sous la forme d'un dispositif de freinage avec un dispositif d'entraînement à fonctionnement notamment hydraulique ou électromécanique.

11. Presse à balles rondes (1) selon la revendication 10, **caractérisée en ce que** le capteur (26), au nombre d'au moins un, du dispositif à capteur (25) est réalisé sous forme de capteur de force (30) qui est conçu pour déterminer la force d'entraînement fournie par le dispositif d'entraînement, ou que le capteur (26), au nombre d'au moins un, du dispositif à capteur (25) est réalisé sous forme de capteur de pression (34) qui est conçu pour déterminer une pression hydraulique (p_An) appliquée au dispositif d'entraînement à fonctionnement hydraulique, aux fins de déterminer la valeur réelle (F_Ist) pour la force (F_W) résultant de la tension d'enrubannage.

12. Presse à balles rondes (1) selon une des revendications 8 à 11, **caractérisée en ce qu'**un ensemble de rouleaux de renvoi (20) est disposé en aval du dispositif d'étirage (13) et comprend plusieurs rouleaux de renvoi (21) qui sont montés tournants sur un dispositif de support (22), le dispositif de support (22) étant sollicité par une force élastique en tant que force antagoniste lors du dévidage du matériau d'en-rubannage (8), où un capteur (33), réalisé sous forme de potentiomètre, détecte la déviation du dispositif de support (22) sollicité par ressort du fait de la force (F_W) résultant de la tension d'enrubannage.

13. Presse à balles rondes (1) selon une des revendications 8 à 12, **caractérisée en ce que** la presse à balles rondes (1) est réalisée avec au moins un capteur d'environnement (27) qui est conçu pour la détection de variations d'au moins un paramètre d'environnement (U), notamment de l'humidité de l'air et/ou de la température ambiante.

14. Presse à balles rondes (1) selon la revendication 13, **caractérisée en ce que** l'unité de commande (28) est conçue pour évaluer les signaux du capteur d'environnement (27), au nombre d'au moins un, et pour réaliser, en fonction de l'évaluation, une adaptation du diagramme tension-allongement et/ou pour proposer et/ou réaliser, notamment de façon automatique, la mise à jour de la valeur de consigne (F_Soll).
